# EUROPEAN PATENT SPECIFICATION

(11) **EP 3 109 979 B1**
(45) Date of publication and mention of the grant of the patent: **19.06.2019**
(21) Application number: 14882895.7
(22) Date of filing: 19.02.2014
(51) Int. Cl.: H02K 11/33

(54) **MOTOR DRIVE DEVICE**
MOTORANTRIEBSVORRICHTUNG
DISPOSITIF D'EXCITATION DE MOTEUR

(43) Date of publication of application: 28.12.2016
(73) Proprietor: Mitsubishi Electric Corporation, Tokyo 100-8310 (JP)
(72) Inventor: ICHIKAWA, Takanori, Tokyo 100-8310 (JP); ASAO, Yoshihito, Tokyo 100-8310 (JP); KAWANO, Yu, Tokyo 100-8310 (JP); NISHITANI, Shoichiro, Tokyo 100-8310 (JP); TAMURA, Koji, Tokyo 100-8310 (JP); MATSUO, Hiroyuki, Tokyo 100-8310 (JP); NAGANO, Hirokazu, Tokyo 100-8310 (JP)
(74) Representative: Hoffmann Eitle
(86) International application number: PCT/JP2014/053910
(87) International publication number: WO 2015/125234

(56) References cited:
- JP-A- 2006 197 781
- JP-A- 2011 010 410
- JP-A- 2012 124 422
- JP-B1- 5 414 869
- US-A1- 2012 307 476
- US-A1- 2012 313 467
- US-A1- 2013 088 128

## Description

### TECHNICAL FIELD

The present invention relates to a motor drive device, and particularly to a motor drive device used for an electric power steering device for vehicle.

### BACKGROUND ART

In a conventional motor drive device used for an electric power steering device for vehicle, semiconductor switching elements composing a three-phase bridge circuit for controlling current of an electric motor, and smoothing capacitors for suppressing a ripple component of current flowing through the electric motor, are paired for respective arms of the three-phase bridge circuit, and arranged concentrically about a rotor axis. Thus, the connection distance between a power section and the smoothing capacitors can be shortened, the impedance of the three-phase bridge circuit can be reduced, and the ripple can be efficiently absorbed (for example, Patent Document 1).

### CITATION LIST

### PATENT DOCUMENT

Patent Document 1: International Publication No. WO2011-142050

Document US 2013/088128 A1, April 11, 2013, relates to a device for reducing temperature rise in its control board. The device includes a switching element, a coil, a smoothing capacitor, an electrical connection member for electrically connecting the switching element with the smoothing capacitor and the coil, a control board that mounts a control element, a control signal line for electrically connecting the switching element with the control board and a switching element placing portion for placing the switching element thereon.

Document JP 2011 010410 A, January 13, 2011, relates to a motor drive device comprising a motor, power part and control part.

Document US 2012/313467, December 13, 2012, relates to a controlling device for controlling an electric motor disposed on an axial line of the rotor shaft of the electric motor. Document US 2012/307476 A1, December 06, 2012 relates to control unit and driving apparatus in which a power terminals of power modules are magnetically coupled to power output terminals and power input terminals.

### SUMMARY OF THE INVENTION

### PROBLEMS TO BE SOLVED BY THE INVENTION

In such a motor drive device, smoothing capacitors which are large components are located with a power circuit, and the mounting area of the power circuit cannot be fully secured.

In order to enlarge the mounting area of the power circuit, the motor outer diameter needs to be increased, leading to size increase and weight increase in the product.

In the case of attaching the smoothing capacitors to a heat sink, it is necessary to provide a groove or the like in the heat sink for downsizing the product, and thus the heat capacity of the heat sink is decreased, resulting in reduction of the heat dissipation property. Since a plurality of mounted components are located on the same plane, accuracy is required in assembling, and accuracy is required in processes of components and the mounting surface, leading to high cost.

Since the smoothing capacitors and the power circuit are close to each other, a problem of noise arises.

Considering the above, an object of the present invention is to provide a motor drive device that allows for increase in the mounting area of a power circuit without increase in the diameter of an electric motor.

### SOLUTION TO THE PROBLEMS

A motor drive device according to the present invention includes: an electric motor; and a control device located on an axial line of a rotary shaft of the electric motor and controlling driving of the electric motor. The control device includes: a semiconductor switching element composing a bridge circuit for controlling current of the electric motor; a sensor board on which a rotational sensor for detecting a phase of a rotor of the electric motor is mounted; a capacitor assembly unit including a smoothing capacitor for suppressing a ripple component of current flowing through the electric motor; a power circuit including the semiconductor switching element; a heat sink for dissipating heat generated from the power circuit; and a control board on which a microcomputer for generating a drive signal for driving the semiconductor switching element is mounted. The heat sink is located on the axial line of the rotary shaft of the electric motor. The power circuit is mounted on one surface of the heat sink perpendicular to the axial line of the rotary shaft of the electric motor. The capacitor assembly unit is located on another surface parallel with the surface on which the power circuit is mounted.

### EFFECT OF THE INVENTION

According to the present invention, the power circuit is mounted on one surface of the heat sink perpendicular to the axial line of the rotary shaft of the electric motor, and the capacitor assembly unit is located on another surface parallel with the surface on which the power circuit is mounted. Therefore, the mounting area of the power circuit can be increased without increase in the diameter of the electric motor.

Since the heat sink need not have a groove, a hole, or the like for providing the capacitor, the heat capacity of the heat sink increases and the heat dissipation property is improved.

Since the capacitor is attached to a surface different from the surface on which the power circuit is provided, the accuracy of processes of components and the mounting surfaces can be reduced, leading to cost reduction.

Since it is not necessary to consider interference in assembling, the assembly workability is improved.

Since the capacitor and the power circuit are separated from each other, electromagnetic noise can be reduced.

### BRIEF DESCRIPTION OF THE DRAWINGS

FIG. 1 is a block configuration diagram of an electric power steering device provided with a motor drive device according to embodiment 1 of the present invention.
FIG. 2 is a sectional view of the motor drive device according to embodiment 1 of the present invention.
FIG. 3 is a plan view of a capacitor assembly unit in embodiment 1 of the present invention.
FIG. 4 is a front view of the capacitor assembly unit in embodiment 1 of the present invention.
FIG. 5 is a partial sectional view for explaining an example of an assembly method for the capacitor assembly unit in embodiment 1 of the present invention.
FIG. 6 is an A-A sectional view of the motor drive device shown in FIG. 2.
FIG. 7 is a sectional view of a control device part of a motor drive device according to embodiment 2 of the present invention.
FIG. 8 is a plan view of a capacitor assembly unit in embodiment 2 of the present invention.
FIG. 9 is a side view of the capacitor assembly unit in embodiment 2 of the present invention.
FIG. 10 is a sectional view of a control device part of a motor drive device according to embodiment 3 of the present invention.
FIG. 11 is a plan view of a capacitor assembly unit in embodiment 3 of the present invention.
FIG. 12 is a front view of the capacitor assembly unit in embodiment 3 of the present invention.

### DESCRIPTION OF EMBODIMENTS

Hereinafter, preferred embodiments of a motor drive device according to the present invention will be described with reference to the accompanying drawings.

### Embodiment 1

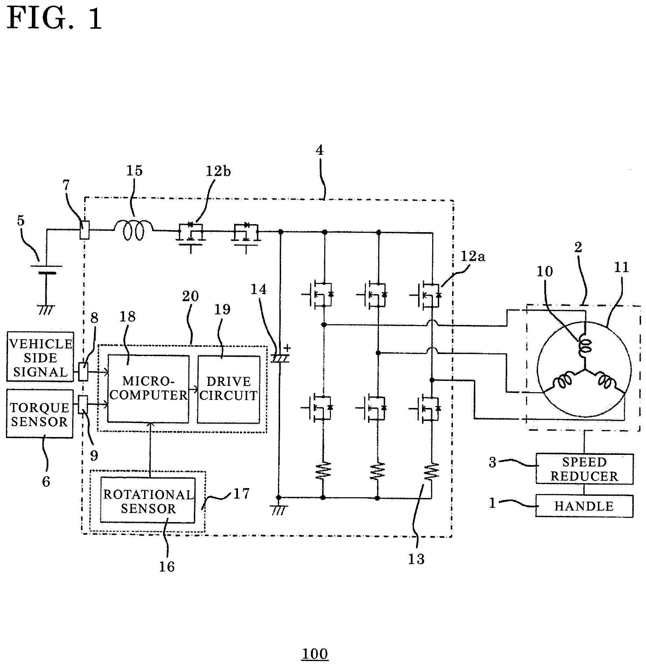

FIG. 1 is a block configuration diagram of an electric power steering device provided with a motor drive device according to embodiment 1 of the present invention.

In FIG. 1, the electric power steering device includes: a handle 1 to be operated by a driver; an electric motor 2 which outputs torque to the handle 1 to assist steering; a speed reducer 3 for reducing the rotation speed of the electric motor 2; a control device 4 for controlling driving of the electric motor 2; a battery 5 for supplying current for driving the electric motor 2; a torque sensor 6 for detecting steering torque of the handle 1; a power connector 7 for electrically connecting the battery 5 and the control device 4; a vehicle side signal connector 8 through which a vehicle side signal such as a travelling speed signal of a vehicle is inputted from the vehicle side; and a torque sensor connector 9 for electrically connecting the torque sensor 6 and the control device 4.

First, the configuration of the electric motor 2 will be described.

The electric motor 2 is a three-phase brushless motor, and includes: a stator 11 having armature windings 10 for U phase, V phase, and W phase; and a later-described rotor 24 opposed in the radial direction to the stator 11.

The armature windings 10 of the stator 11 are Y-connected or delta-connected (not shown).

Next, the configuration of the control device 4 will be described.

The control device 4 includes: a semiconductor switching element 12a such as an FET for switching motor current in accordance with the magnitude and direction of assist torque to be outputted to the handle 1; a semiconductor switching element 12b such as an FET which forms a power supply relay as switch means for conducting or interrupting battery current supplied from the battery 5 to the semiconductor switching element 12a; a shunt resistor 13 for detecting the motor current; a smoothing capacitor 14 for absorbing a ripple component of the motor current flowing through the electric motor 2; a later-described power circuit 33 on which the shunt resistor 13 and the semiconductor switching elements 12a and 12b are mounted; a coil 15 for preventing electromagnetic noise caused in switching operation of the semiconductor switching element 12a from leaking to the outside; a rotational sensor 16 for detecting the rotation angle of the rotor 24 described later; a sensor board 17 on which the rotational sensor 16 is mounted; a microcomputer 18 for calculating the assist torque based on a steering torque signal from the torque sensor 6, and calculating current corresponding to the assist torque by feeding back the motor current and the rotation angle of the rotor 24 detected by the rotational sensor 16; a drive circuit 19 which outputs a drive signal for controlling operation of the semiconductor switching element 12a in response to a command from the microcomputer 18; and a control board 20 on which the microcomputer 18 and the drive circuit 19 are mounted.

The microcomputer 18 receives the steering torque from the torque sensor 6, rotation angle information about the rotor 24 from the rotational sensor 16, and the travelling speed signal from the vehicle side signal connector 8.

In addition, the microcomputer 18 receives, as feedback input, the motor current from the shunt resistor 13.

Based on the above information and signals, the microcomputer 18 generates a rotation direction command for power steering, and a current control amount corresponding to the assist torque, and each drive signal is inputted to the drive circuit 19.

When receiving the rotation direction command and the current control amount, the drive circuit 19 generates and applies the drive signal to the semiconductor switching element 12a.

Thus, to the electric motor 2, current from the battery 5 flows through the power connector 7, the coil 15, and the semiconductor switching elements 12b and 12a, and a desired amount of assist torque is outputted in a desired direction.

At this time, the motor current detected through the shunt resistor 13 is fed back to the microcomputer 18, and thereby is controlled so as to coincide with a motor current command from the microcomputer 18 to the drive circuit 19.

The motor current is controlled while a ripple component caused by switching operation when the semiconductor switching element 12a is driven is smoothed by the smoothing capacitor 14.

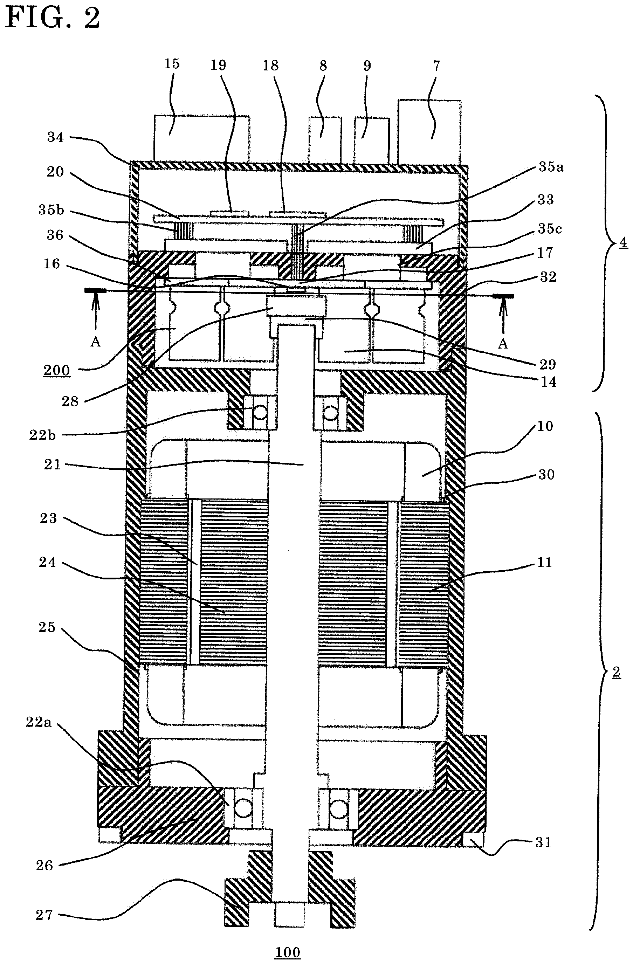

Next, the structure of a motor drive device 100 used for the electric power steering device will be described with reference to FIG. 2.

FIG. 2 is a sectional view of the motor drive device 100 according to the present embodiment 1.

First, the structure of the electric motor 2 will be described.

The electric motor 2 includes: a rotary shaft 21; bearings 22a and 22b rotatably supporting the rotary shaft 21; a rotor 24 to which a plurality of magnetized rotor magnets 23 are fixed along the circumferential direction; the stator 11 opposed to the outer circumferential surface of the rotor 24; a frame 25 for fixing the stator 11; a housing 26 which is connected to one end of the frame 25 and to which the bearing 22a is attached; a coupling 27 fixed to an end of the rotary shaft 21 and transmitting torque of the electric motor 2; and a sensor magnet holder 29 which is provided at an end of the rotary shaft 21 opposite to the fixation portion of the coupling 27 and to which a magnetized sensor magnet 28 is attached.

The stator 11 is formed by, for example, stacking electromagnetic steel sheets with a thickness of 0.3 to 0.5 mm, in the rotary shaft direction of the electric motor 2, and fixing them by punching swaging, welding, or the like.

The stator 11 includes: an insulator 30 attached between magnetic pole teeth (not shown) opposed to the outer circumference of the rotor magnets 23 provided on the outer circumference of the rotor 24; and the armature windings 10 wound on the insulator 30 and connected to the three phases of U phase, V phase, and W phase. Winding terminals of the armature windings 10 extend in parallel with the rotary shaft direction of the electric motor 2 toward the control device 4, to be connected to output terminals for U phase, V phase, and W phase.

The frame 25 having a portion to be joined with the stator 11 is located around the outer circumference of the stator 11. The stator 11 and the frame 25 are joined by, for example, shrink fit or press fit, whereby the stator 11 is fixed.

As in the stator 11, the rotor 24 is formed by, for example, stacking electromagnetic steel sheets with a thickness of 0.3 to 0.5 mm, in the rotary shaft direction of the electric motor 2, and fixing them by punching swaging or welding.

In the case where the rotor 24 has an SPM (Surface Permanent Magnet) structure, the rotor magnets 23 which are permanent magnets are fixed to the outer circumference of the rotor 24 by bonding or the like.

The rotor magnets 23 are magnetized before or after they are fixed to the rotor 24.

The rotor 24 has a hole to be fitted to the rotary shaft 21, and is joined with the rotary shaft 21 by, for example, press fit or shrink fit, whereby the rotor 24 is fixed to the rotary shaft 21.

The frame 25 has portions to be joined with the stator 11 and the bearing 22b. The stator 11 is joined by, for example, press fit or shrink fit, and the bearing 22b is joined by, for example, press fit, and thus they are fixed to the frame 25.

End surfaces of the frame 25 have portions to be fitted to the housing 26 and a heat sink 32 described later, and are processed with high accuracy for achieving the positional accuracy of each component.

The housing 26 has a portion to be joined with the bearing 22a, and the bearing 22a is joined by, for example, press fit, and thus fixed.

The housing 26 has a portion to be fitted to the end surface of the frame 25. The portion to be fitted is fitted to the one end of the frame 25, and fixed by a screw 31.

In order to ensure a sealed state in the electric motor 2, a seal member such as an O ring (not shown) or an adhesive agent (not shown) is provided at a portion where the housing 26 and the frame 25 are fitted to each other.

The coupling 27 is fixed to an end of the rotary shaft 21 by, for example, press fit, and transmits a drive force to a transmission mechanism (not shown) of the electric power steering device.

The sensor magnet 28 is a permanent magnet, and is provided so as to be opposed to the rotational sensor 16 attached to the sensor board 17 described later, in the rotary shaft direction of the electric motor 2.

The sensor magnet 28 is joined, by insert molding or outsert such as bonding, with the sensor magnet holder 29 fixed to the end of the rotary shaft 21 opposite to a side where the coupling 27 is fixed.

The sensor magnet holder 29 is made of a nonmagnetic material for suppressing magnetic flux leakage from the sensor magnet 28.

The sensor magnet 28 may be magnetized before the sensor magnet 28 is joined with the rotary shaft 21 or after the sensor magnet 28 is joined with the rotary shaft 21.

Next, the structure of the control device 4 will be described.

The control device 4 for controlling driving of the electric motor 2 is provided on the axial line of the rotary shaft 21 of the electric motor 2. The control device 4 includes: the heat sink 32 for dissipating heat generated from each component; the power circuit 33 attached to the heat sink 32; the control board 20 on which the microcomputer 18 and the drive circuit 19 for generating the drive signals for the semiconductor switching elements 12a and 12b are mounted; the sensor board 17 on which the rotational sensor 16 for detecting the rotation angle of the rotor 24 is mounted; a capacitor assembly unit 200 including a plurality of smoothing capacitors 14 for removing a ripple component of motor current flowing through the electric motor 2; the coil 15 for removing electromagnetic noise; a circuit case 34; and bus bars 35a, 35b, and 35c for electrically connecting the components.

The heat sink 32 is made of a material having a high thermal conductivity, such as aluminum, for dissipating heat generated from mounted components such as the power circuit 33.

The heat sink 32 has a portion to be fitted. The portion to be fitted is fitted to the frame 25, and fixed on the axial line of the rotary shaft 21 of the electric motor 2 by press fit, a screw (not shown), bonding, or the like.

In order to ensure a sealed state in the electric motor 2, a seal material such as an O ring (not shown) or an adhesive agent (not shown) is provided at a portion where the heat sink 32 and the frame 25 are fitted.

The power circuit 33 is attached to one surface of the heat sink 32, which is perpendicular to the axial line of the rotary shaft 21 of the electric motor 2 and which is on the side where the circuit case 34 is attached.

The power circuit 33 is attached to the heat sink 32 via grease (not shown), an insulating sheet (not shown), or the like, thus improving the heat dissipation property.

The power circuit 33 has mounted thereon components such as: the semiconductor switching element 12a composing a three-phase bridge circuit for switching the motor current of the electric motor 2 in accordance with the magnitude and direction of the assist torque; the shunt resistor 13 for detecting the current of the electric motor 2; and the semiconductor switching element 12b which forms a power supply relay as switch means for conducting or interrupting battery current supplied from the battery 5 to the semiconductor switching element 12a.

The rotational sensor 16 detects the direction of a magnetic field generated by the sensor magnet 28, thereby detecting the rotation angle of the rotor 24.

The rotational sensor 16 is provided so as to be opposed to the sensor magnet 28 attached to one end of the rotary shaft 21, in the rotary shaft direction of the electric motor.

The rotational sensor 16 is mounted on the sensor board 17.

The sensor board 17 is fixed to a part of the heat sink 32 by a screw (not shown) or the like.

The sensor board 17 and the control board 20 are electrically connected via the bus bar 35a.

The control board 20 is electrically connected to the power circuit 33 via the bus bar 35b. Circuit elements and the like, including the microcomputer 18 and the drive circuit 19, are mounted on the control board 20.

The microcomputer 18 is provided with a current detection circuit (not shown) for detecting the motor current flowing through the electric motor 2 via one end of the shunt resistor 13, and calculates assist torque based on the steering torque signal from the torque sensor 6, and calculates current corresponding to the assist torque by feeding back the motor current and the rotation angle of the rotor 24 detected by the rotational sensor 16.

The microcomputer 18 outputs signals for controlling the semiconductor switching elements 12a and 12b.

The coil 15 is electrically connected to the power circuit 33 via a bus bar (not shown).

The coil 15 prevents electromagnetic noise caused in switching operation of the semiconductor switching elements 12a and 12b from leaking to the outside.

The circuit case 34 is attached to the end surface of the heat sink 32 on the side opposite to the electric motor 2.

The circuit case 34 is provided with: the power connector 7 for making electric connection with the battery 5 of the vehicle and for supplying power; the vehicle side signal connector 8 for receiving information about the vehicle such as the vehicle speed; and the torque sensor connector 9 for receiving a signal from the torque sensor 6.

On another surface parallel to the surface on which the power circuit 33 is mounted, i.e., a surface of the heat sink 32 opposite to the side on which the power circuit 33 is mounted, the capacitor assembly unit 200 is provided such that the smoothing capacitors 14 are on the frame 25 side. The capacitor assembly unit 200 is fixed to the heat sink 32 by a screw (not shown) or the like.

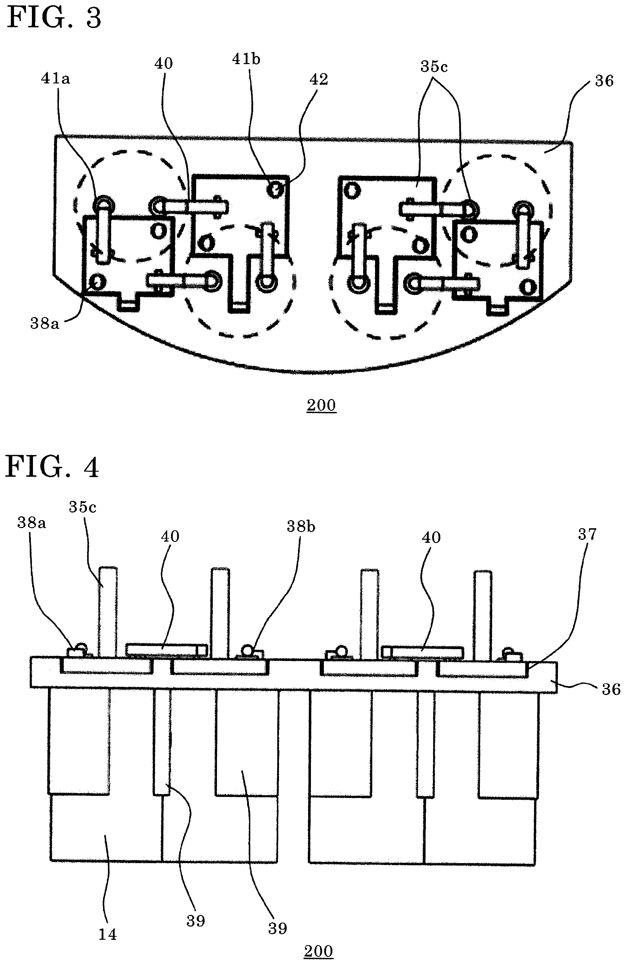

Next, the structure of the capacitor assembly unit 200 will be described based on FIG. 3 to FIG. 6.

FIG. 3 is a plan view of the capacitor assembly unit 200 according to the present embodiment 1. FIG. 4 is a front view of the capacitor assembly unit 200 according to the present embodiment 1.

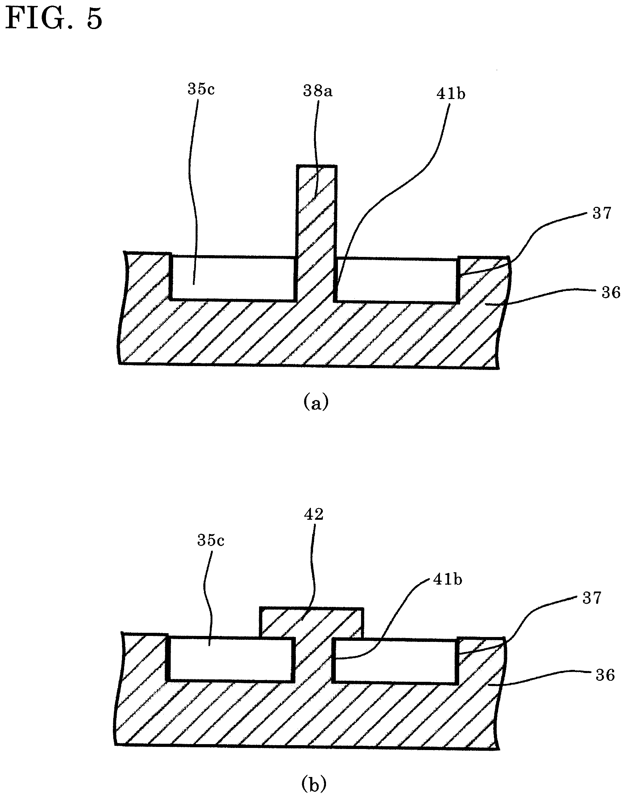

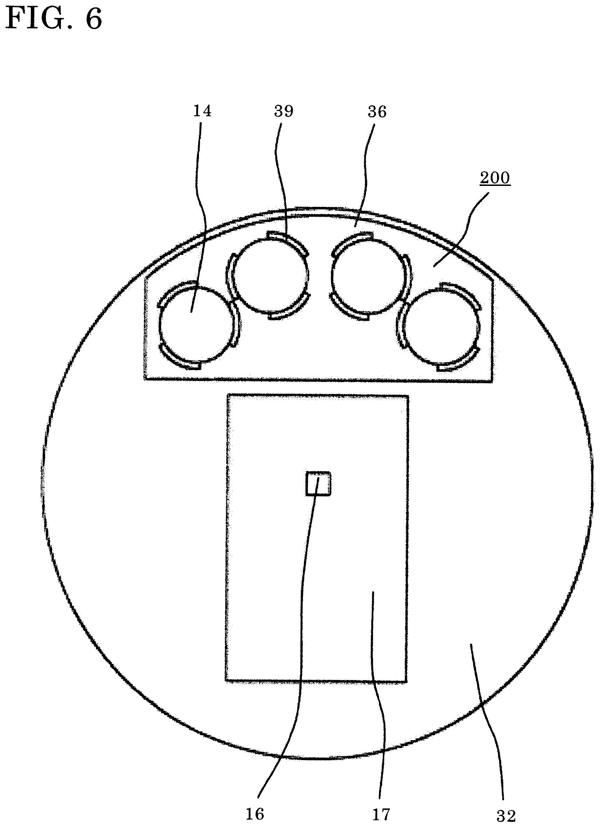

FIG. 5 is a partial sectional view of the capacitor assembly unit 200 according to the present embodiment 1, in which (a) shows the state before a projection 38a described later is heated and (b) shows the state in which a swage portion 42 described later is formed after the end of the projection 38a is heated and melted. FIG. 6 is an A-A sectional view of the motor drive device 100 shown in FIG. 2.

The capacitor assembly unit 200 includes: a plurality of (in the drawing, four) smoothing capacitors 14 having a cylindrical shape, for removing a ripple component of the motor current flowing through the electric motor 2; the bus bars 35c electrically connected to the power circuit 33; and a holder 36 for holding the smoothing capacitors 14 and the bus bars 35c.

The bus bars 35c and the holder 36 may be joined by outsert or insert. In the present embodiment, the case where the bus bars 35c are joined with the holder 36 by outsert will be described.

Since the holder 36 is required to make electrical insulation between each bus bar 35c and the heat sink 32 and between positive and negative electrodes of the bus bar 35c, the holder 36 is made of an insulating member such as resin.

The holder 36 has substantially a flat shape elongated in the direction perpendicular to the rotary shaft 21 of the electric motor 2. The holder 36 has an attachment surface for the bus bars 35c, and has, on the opposite side, an attachment surface for the smoothing capacitors 14.

The attachment surface for the bus bars 35c, of the holder 36 has grooves 37 into which the bus bars 35c are fitted, and a plurality of projections 38a extending in parallel with the rotary shaft 21 of the electric motor 2.

The attachment surface for the smoothing capacitors 14, of the holder 36 has a plurality of holding portions 39 which are for attaching the smoothing capacitors 14 and which extend in parallel with the rotary shaft 21 of the electric motor 2.

The holder 36 has a plurality of penetrating holes 41a at positions corresponding to lead wires 40 of the smoothing capacitors 14 described later.

Each bus bar 35c has a flat surface portion to be fitted into the groove 37 of the holder 36, and a connection portion extending toward the power circuit 33 in a direction perpendicular to the flat surface portion.

Each bus bar 35c has: a plurality of projections 38b at a part of the flat surface portion, which slightly protrude in the rotary shaft direction of the electric motor 2; and a plurality of penetrating holes 41b at positions for fitting to the projections 38a of the holder 36.

The bus bars 35c are arranged in the horizontal direction on the attachment surface of the holder 36.

As shown in FIG. 5(a), each bus bar 35c is positioned with respect to the holder 36 by fitting the projection 38a of the holder 36 into the hole 41b of the flat surface portion of the bus bar 35c and fitting the bus bar 35c into the groove 37 of the holder 36.

The fixation of each bus bar 35c to the holder 36 may be made by press fit or bonding between the groove 37 and the projection 38a or by using another member (not shown). In the case where the holder 36 is made of resin, as shown in FIG. 5(b), the projection 38a of the holder 36 is heated and melted to form the swage portion 42 which is larger than the diameter of the hole 41b of the bus bar 35c, whereby the bus bar 35c can be fixed.

Each smoothing capacitor 14 has the lead wires 40 protruding.

The smoothing capacitors 14 are arranged in the horizontal direction on the attachment surface of the holder 36.

Each smoothing capacitor 14 has a cylindrical shape, and is fixed to the holder 36 by being attached to the holding portion 39 of the holder 36 such that the cylinder axis of the smoothing capacitor 14 is parallel with the rotary shaft 21 of the electric motor 2.

The lead wire 40 of each smoothing capacitor 14 passes through the hole 41a of the holder 36 so as to penetrate to the attachment surface side of the bus bar 35c.

The lead wire 40 of each smoothing capacitor 14 is bent toward the projection 38b of the bus bar 35c so that the lead wire 40 contacts with the end of the projection 38b of the bus bar 35c.

The contact portions of the projection 38b of the bus bar 35c and the lead wire 40 are welded by, for example, resistance welding, whereby the smoothing capacitor 14 and the bus bar 35c are electrically connected.

In the present embodiment, the holder 36 has the hole 41a for allowing the lead wire 40 to penetrate therethrough, and the lead wire 40 is bent after the smoothing capacitor 14 is attached to the holder 36. However, the lead wire 40 of the smoothing capacitor 14 may be bent before attachment to the holder 36, and then the lead wire may be passed through a hole (not shown) provided in the holder 36, to be electrically connected to the bus bar 35c.

In the case where the contact portions of the projection 38b of the bus bar 35c and the lead wire 40 are connected by resistance welding, a projection may be formed on a part of the bus bar 35c to perform projection welding, whereby the density of current can be increased and the connection can be stably performed.

After the smoothing capacitors 14, the holder 36, and the bus bars 35c are assembled to form the capacitor assembly unit 200, as shown in FIG. 6, the capacitor assembly unit 200 is attached to a part of the heat sink 32.

In this state, the plurality of (in the drawing, four) smoothing capacitors 14 of the capacitor assembly unit 200 are connected in parallel to the three-phase bridge circuit composed of the semiconductor switching element 12a of the power circuit 33, via the bus bars 35c.

Electric insulation between the heat sink 32 and the bus bar 35c is achieved by forming a hole at a bus bar penetration portion in the heat sink 32 so as to prevent contact between the heat sink 32 and the bus bars.

As described above, in the present embodiment 1, the power circuit 33 is mounted on one surface of the heat sink 32 perpendicular to the axial line of the rotary shaft 21 of the electric motor 2, and the capacitor assembly unit 200 is located on another surface parallel with the surface on which the power circuit 33 is mounted. Thus, the capacitor assembly unit 200 is located on a surface on the side opposite to the power circuit 33 via the heat sink 32. Therefore, the area of the power circuit 33 can be enlarged without increase in the diameter of the electric motor 2.

It is not necessary to provide grooves or the like for attaching the smoothing capacitors 14 in the heat sink 32. Therefore, the heat capacity of the heat sink 32 increases, and the heat dissipation property is improved.

The accuracy of processes of components of the control device 4 and the mounting surfaces of the components can be reduced, leading to cost reduction.

It is not necessary to consider interference in assembling, and assembly workability is improved.

Since the smoothing capacitors 14 are separated from the power circuit 33, electromagnetic noise can be reduced.

Since the smoothing capacitors 14 are located opposite to the power circuit via the heat sink 32, the heat sink 32 serves as a shield and the influence of the electromagnetic noise can be further reduced.

Since the capacitor assembly unit 200 is attached to the heat sink 32 via the holder 36, the heat dissipation property for the smoothing capacitors 14 is also improved. Therefore, variations in characteristics such as the electrostatic capacitances of the smoothing capacitors 14 are decreased, and the product can have stable characteristics.

Since the holder 36 of the capacitor assembly unit 200 is made of an insulating member, surfaces of the smoothing capacitors 14 on the side where the lead wires 40 are provided can be fixed in close contact with the surface of the holder 36, and downsizing in the shaft direction is achieved.

In the capacitor assembly unit 200, the smoothing capacitors 14 are attached to the holder 36 such that the cylinder axes of the smoothing capacitors 14 are parallel with the rotary shaft 21 of the electric motor 2. Therefore, the bending lengths of the lead wires 40 of the smoothing capacitors 14 do not depend on variations in the outer diameters of the smoothing capacitors 14, the bus bars 35c and the lead wires 40 can be stably connected, and the reliability of the product can be ensured. In the capacitor assembly unit 200, the bus bars 35c are joined with the holder 36 by outsert. Therefore, the structure of a mold for molding the holder 36 is simplified, and the mold cost and the process cost are reduced.

The bus bars 35c are not subjected to the molding pressure. Therefore, the shape accuracy of the bus bars 35c upon the process can be maintained.

In the capacitor assembly unit 200, the holder 36, the bus bars 35c, and the lead wires 40 are all arranged and connected on the same plane. Therefore, the dimension in the shaft direction is small, and a simple and inexpensive structure is achieved. Since the holder 36 has the holding portions 39, the smoothing capacitors 14 can be held against vibration or impact, and in addition, the holding portions 39 can be utilized as guides for attaching the smoothing capacitors 14 to the holder 36.

The holes 41b of the bus bars 35c and the projections 38a of the holder 36 are fitted to each other, and a part of each projection 38a is heated and melted to form the swage portion 42, whereby fixation of the bus bars 35c can be performed as well as positioning thereof, resulting in decrease in the number of components.

Since the projection 38b of each bus bar 35c and the lead wire 40 of each smoothing capacitor 14 are welded by resistance welding or the like, the density of current can be increased and the connection can be stably performed.

In the case where two smoothing capacitors 14 are connected to the bus bar 35c for one polarity as in the present embodiment, if electrodes are brought into contact with two connection portions between the lead wires 40 and the projections 38b of the bus bars 35c so as to be welded at the same time, the cycle time can be shortened.

In the case where the smoothing capacitors 14 and the bus bars 35c are connected by resistance welding as in the present embodiment, current is applied while the electrodes pressurize the lead wires 40 in the rotary shaft direction. Therefore, as compared to the case of, for example, using such a current feeding tool as to clamp the welded part as in TIG welding, an area to interfere with components can be reduced, and the degree of freedom in the mounting layout can be enhanced.

The lead wires 40 of each smoothing capacitor 14 can be welded to the bus bar 35c in the state in which the lengths of the lead wires 40 for the respective polarities are different from each other. Therefore, the polarities of the smoothing capacitor 14 can be easily identified, and assembly defect is reduced, leading to improvement in the first pass yield.

By elongating the lead wires 40, the part where the lead wire 40 and the bus bar 35c are welded can be separated from the smoothing capacitor 14, and influence on the smoothing capacitor 14 caused by heat generated in welding can be reduced without changing the axial length of the product. Thus, the reliability of the product can be improved.

As shown in FIG. 6, the smoothing capacitors 14 are arranged in an arc shape, whereby an area occupied by the capacitor assembly unit 200 attached to the heat sink 32 can be reduced. This allows attachment of other components and enhances the degree of freedom in the layout, or allows the volume of the heat sink 32 to be increased in the space, whereby the heat capacity of the heat sink 32 increases and the heat dissipation property can be improved.

In the case where the smoothing capacitors 14 are arranged in an arc shape as in the present embodiment, the holder 36 also has an arc shape. When attached to the heat sink 32, as shown in FIG. 6, the capacitor assembly unit 200 occupies only a part of the attachment surface of the heat sink 32, and allows formation of a surplus space.

Although FIG. 6 shows an example in which the sensor board 17 is mounted in the surplus space, another component may be mounted, or the volume of the heat sink may be increased to increase the heat capacity, whereby the axial length of the heat sink may be shortened. Thus, the degree of freedom in the design can be improved.

### Embodiment 2

Next, a motor drive device 100 according to embodiment 2 will be described.

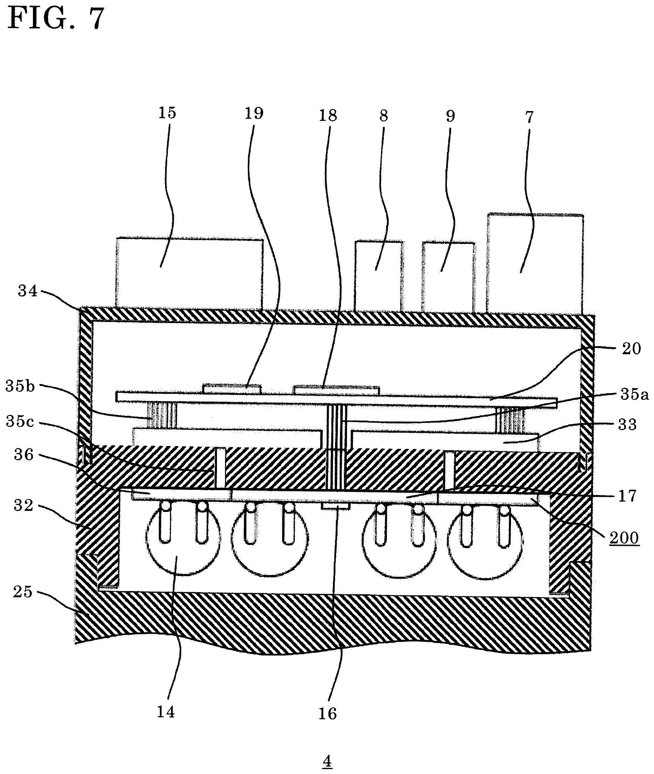

FIG. 7 is a sectional view of the control device 4 used for the motor drive device 100 according to embodiment 2.

The structure of the electric motor 2 attached concentrically and integrally with the control device 4 is the same as in embodiment 1.

The control device 4 includes: the heat sink 32 for dissipating heat generated from each component; the power circuit 33 attached to the heat sink 32; the control board 20 on which the microcomputer 18 and the drive circuit 19 for generating the drive signals for the semiconductor switching elements 12a and 12b are mounted; the sensor board 17 on which the rotational sensor 16 for detecting the rotation angle of the rotor 24 is mounted; the capacitor assembly unit 200 including the plurality of smoothing capacitors 14 for removing a ripple component of motor current flowing through the electric motor 2; the coil 15 for removing electromagnetic noise; the circuit case 34; and the bus bars 35a, 35b, and 35c for electrically connecting the components.

The heat sink 32 is made of a material having a high thermal conductivity, such as aluminum, for dissipating heat generated from the power circuit 33 and the like.

The heat sink 32 has a portion to be fitted. The portion to be fitted is fitted to one end of the frame 25, and fixed by press fit, a screw (not shown), bonding, or the like.

In order to ensure a sealed state in the electric motor 2, a seal material (not shown) such as an O ring (not shown) or an adhesive agent is provided at a portion where the heat sink 32 and the frame 25 are fitted.

The power circuit 33 is attached to the surface of the heat sink 32 on the side where the circuit case 34 is attached.

The power circuit 33 is attached to the heat sink 32 via grease (not shown), an insulating sheet (not shown), or the like, thus improving the heat dissipation property.

The power circuit 33 has mounted thereon components such as: the semiconductor switching element 12a composing a three-phase bridge circuit for switching the motor current of the electric motor 2 in accordance with the magnitude and direction of the assist torque; the shunt resistor 13 for detecting the current of the electric motor 2; and the semiconductor switching element 12b which forms a power supply relay as switch means for conducting or interrupting battery current supplied from the battery 5 to the semiconductor switching element 12a.

The rotational sensor 16 detects the direction of a magnetic field generated by the sensor magnet 28, thereby detecting the rotation angle of the rotor 24.

The rotational sensor 16 is provided so as to be opposed to the sensor magnet 28 attached to one end of the rotary shaft 21.

The rotational sensor 16 is mounted on the sensor board 17.

The sensor board 17 is fixed to a part of the heat sink 32 by a screw (not shown) or the like.

The sensor board 17 and the control board 20 are electrically connected via the bus bar 35a.

The control board 20 is electrically connected to the power circuit 33 via the bus bar 35b. Circuit elements and the like, including the microcomputer 18 and the drive circuit 19, are mounted on the control board 20.

The microcomputer 18 is provided with a current detection circuit for detecting the motor current flowing through the electric motor 2 via one end of the shunt resistor 13, and calculates assist torque based on the steering torque signal from the torque sensor 6, and calculates current corresponding to the assist torque by feeding back the motor current and the rotation angle of the rotor 24 detected by the rotational sensor 16.

The microcomputer 18 outputs signals for controlling the semiconductor switching elements 12a and 12b.

The coil 15 is electrically connected to the power circuit 33 via a bus bar (not shown).

The coil 15 prevents electromagnetic noise caused in switching operation of the semiconductor switching elements 12a and 12b from leaking to the outside.

The circuit case 34 is attached to the end surface of the heat sink 32 on the side opposite to the electric motor 2.

The circuit case 34 is provided with: the power connector 7 for making electric connection with the battery 5 of the vehicle and for supplying power; the vehicle side signal connector 8 for receiving information about the vehicle such as the vehicle speed; and the torque sensor connector 9 for receiving a signal from the torque sensor 6.

The capacitor assembly unit 200 is provided such that the smoothing capacitors 14 are on the frame 25 side. The capacitor assembly unit 200 is fixed to the heat sink 32 by a screw (not shown) or the like.

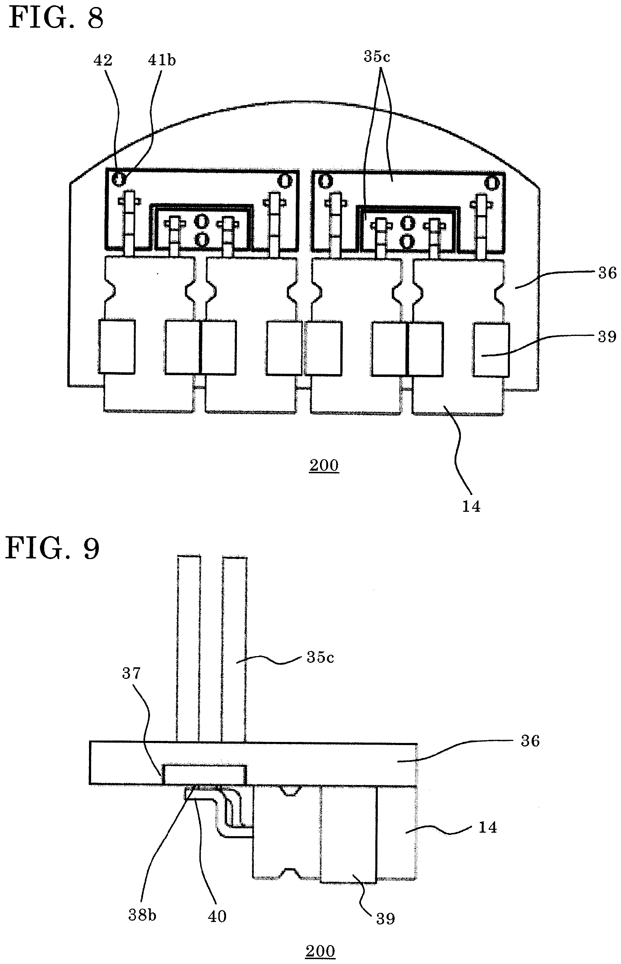

The structure of the capacitor assembly unit 200 will be described based on FIG. 8 and FIG. 9.

FIG. 6 is a plan view of the capacitor assembly unit 200 according to the present embodiment 2. FIG. 9 is a side view of the capacitor assembly unit 200 according to the present embodiment 2.

The capacitor assembly unit 200 includes: the plurality of (in the drawing, four) smoothing capacitors 14 having a cylindrical shape, for removing a ripple component of the motor current flowing through the electric motor 2; the bus bars 35c electrically connected to the power circuit 33; and the holder 36 for holding the smoothing capacitors 14 and the bus bars 35c.

The bus bars 35c and the holder 36 may be joined by outsert or insert. In the present embodiment, the case where the bus bars 35c are joined with the holder 36 by outsert will be described.

Since the holder 36 is required to make electrical insulation between each bus bar 35c and the heat sink 32 and between positive and negative electrodes of the bus bar 35c, the holder 36 is made of an insulating member such as resin.

The holder 36 has substantially a flat shape elongated in the direction perpendicular to the rotary shaft 21 of the electric motor 2. The holder 36 has an attachment surface for the bus bars 35c, and has, on the opposite side, an attachment surface for the smoothing capacitors 14.

The attachment surface for the bus bars 35c, of the holder 36 has the grooves 37 into which the bus bars 35c are fitted, and the plurality of projections 38a extending in parallel with the rotary shaft 21 of the electric motor 2.

The attachment surface for the smoothing capacitors 14, of the holder 36 has the plurality of holding portions 39 which are for attaching the smoothing capacitors 14 and which extend in parallel with the rotary shaft 21 of the electric motor 2.

Each bus bar 35c has a flat surface portion to be fitted into the groove 37 of the holder 36, and a connection portion extending toward the power circuit 33 in a direction perpendicular to the flat surface portion.

Each bus bar 35c has: the plurality of projections 38b at a part of the flat surface portion, which slightly protrude in the rotary shaft direction of the electric motor 2; and the plurality of penetrating holes 41b at positions for fitting to the projections 38a of the holder 36.

The bus bars 35c are arranged in the horizontal direction on the attachment surface of the holder 36.

The manner of attachment between the bus bars 35c and the holder 36 is the same as in embodiment 1.

Each smoothing capacitor 14 has the lead wires 40 protruding.

The smoothing capacitors 14 are arranged in the horizontal direction on the attachment surface of the holder 36.

Each smoothing capacitor 14 has a cylindrical shape, and is fixed to the holder 36 by being attached to the holding portion 39 of the holder 36 such that the cylinder axis of the smoothing capacitor 14 is perpendicular to the rotary shaft 21 of the electric motor 2.

The lead wire 40 of each smoothing capacitor 14 is bent so as to contact with the projection 38b of the bus bar 35c.

The contact portions of the projection 38b of the bus bar 35c and the lead wire 40 are welded by, for example, resistance welding, whereby the smoothing capacitor 14 and the bus bar 35c are electrically connected.

As described above, in the present embodiment 2, the power circuit 33 is mounted on one surface of the heat sink 32 perpendicular to the axial line of the rotary shaft 21 of the electric motor 2 perpendicular to the axial line of the rotary shaft 21 of the electric motor 2, and the capacitor assembly unit 200 is located on another surface parallel with the surface on which the power circuit 33 is mounted. Thus, the capacitor assembly unit 200 is located on a surface on the side opposite to the power circuit 33 via the heat sink 32. Therefore, the area of the power circuit 33 can be enlarged without increase in the diameter of the electric motor 2.

It is not necessary to provide grooves or the like for attaching the smoothing capacitors 14 in the heat sink 32. Therefore, the heat capacity of the heat sink 32 increases, and the heat dissipation property is improved.

The accuracy of processes of components of the control device 4 and the mounting surfaces of the components can be reduced, leading to cost reduction.

It is not necessary to consider interference in assembling, and assembly workability is improved.

Since the smoothing capacitors 14 are separated from the power circuit 33, electromagnetic noise can be reduced.

Since the smoothing capacitors 14 are located opposite to the power circuit via the heat sink 32, the heat sink 32 serves as a shield and the influence of the electromagnetic noise can be further reduced.

Since the capacitor assembly unit 200 is attached to the heat sink 32 via the holder 36, the heat dissipation property for the smoothing capacitors 14 is also improved. Therefore, variations in characteristics such as the electrostatic capacitances of the smoothing capacitors 14 are decreased, and the product can have stable characteristics.

Since the holder 36 of the capacitor assembly unit 200 is made of an insulating member, surfaces of the smoothing capacitors 14 on the side where the lead wires 40 are provided can be fixed in close contact with the surface of the holder 36, and downsizing in the shaft direction is achieved.

In the capacitor assembly unit 200, the smoothing capacitors 14 are attached to the holder 36 such that the cylinder axes of the smoothing capacitors 14 are perpendicular to the rotary shaft 21 of the electric motor 2. Therefore, the product can be downsized in the shaft direction. Since it is not necessary to pass the lead wires 40 of the smoothing capacitors 14 through the holder 36, the structure of the holder 36 is simplified.

In the capacitor assembly unit 200, the bus bars 35c are joined with the holder 36 by outsert. Therefore, the structure of a mold for molding the holder 36 is simplified, and the mold cost and the process cost are reduced.

The bus bars 35c are not subjected to the molding pressure. Therefore, the shape accuracy of the bus bars 35c upon the process can be maintained.

In the capacitor assembly unit 200, the holder 36, the bus bars 35c, and the lead wires 40 are all arranged and connected on the same plane. Therefore, the dimension in the shaft direction is small, and a simple and inexpensive structure is achieved. Since the holder 36 has the holding portions 39, the smoothing capacitors 14 can be held against vibration or impact, and in addition, the holding portions 39 can be utilized as guides for attaching the smoothing capacitors 14 to the holder 36.

The holes 41b of the bus bars 35c and the projections 38a of the holder 36 are fitted to each other, and a part of each projection 38a is heated and melted to form the swage portion 42, whereby fixation of the bus bars 35c can be performed as well as positioning thereof, resulting in decrease in the number of components.

Since the projection 38b of each bus bar 35c and the lead wire 40 of each smoothing capacitor 14 are welded by resistance welding or the like, the density of current can be increased and the connection can be stably performed.

In the case where two smoothing capacitors 14 are connected to the bus bar 35c for one polarity as in the present embodiment, if electrodes are brought into contact with two connection portions between the lead wires 40 and the projections 38b of the bus bars 35c so as to be welded at the same time, the cycle time can be shortened.

In the case where the smoothing capacitors 14 and the bus bars 35c are connected by resistance welding as in the present embodiment, current is applied while the electrodes pressurize the lead wires 40 in the rotary shaft direction. Therefore, as compared to the case of, for example, using such a current feeding tool as to clamp the welded part as in TIG welding, an area to interfere with components can be reduced, and the degree of freedom in the mounting layout can be enhanced.

The lead wires 40 of each smoothing capacitor 14 can be welded to the bus bar 35c in the state in which the lengths of the lead wires 40 for the respective polarities are different from each other. Therefore, the polarities of the smoothing capacitor 14 can be easily identified, and assembly defect is reduced, leading to improvement in the first pass yield.

By elongating the lead wires 40, the part where the lead wire 40 and the bus bar 35c are welded can be separated from the smoothing capacitor 14, and influence on the smoothing capacitor 14 caused by heat generated in welding can be reduced without changing the axial length of the product. Thus, the reliability of the product can be improved.

### Embodiment 3

Next, a motor drive device 100 according to embodiment 3 will be described.

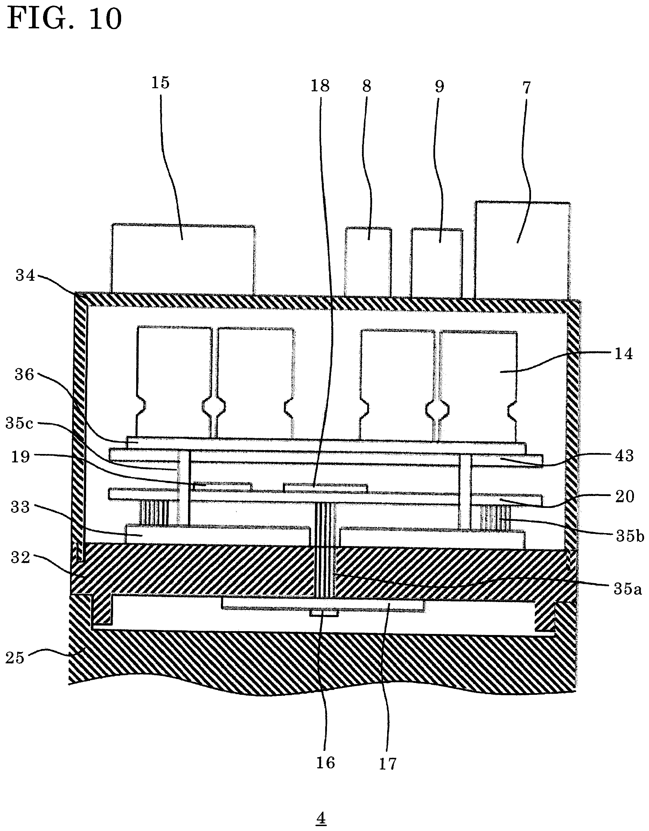

FIG. 10 is a sectional view of the control device 4 used for the motor drive device 100 according to embodiment 3.

The structure of the electric motor 2 attached concentrically and integrally with the control device 4 is the same as in embodiment 1.

The control device 4 includes: the heat sink 32 for dissipating heat generated from each component; the power circuit 33 attached to the heat sink 32; the control board 20 on which the microcomputer 18 and the drive circuit 19 for generating the drive signals for the semiconductor switching elements 12a and 12b are mounted; the sensor board 17 on which the rotational sensor 16 for detecting the rotation angle of the rotor 24 is mounted; the capacitor assembly unit 200 including the plurality of smoothing capacitors 14 for removing a ripple component of motor current flowing through the electric motor 2; the coil 15 for removing electromagnetic noise; the circuit case 34; the bus bars 35a, 35b, and 35c for electrically connecting the components; and an intermediate member 43 which is provided on a side opposite to the heat sink 32 via the control board 20 and to which the capacitor assembly unit 200 is attached.

The heat sink 32 is made of a material having a high thermal conductivity, such as aluminum, for dissipating heat generated from the power circuit 33 and the like.

The heat sink 32 has a portion to be fitted. The portion to be fitted is fitted to one end of the frame 25, and fixed by press fit, a screw (not shown), bonding, or the like.

In order to ensure a sealed state in the electric motor 2, a seal material such as an O ring (not shown) or an adhesive agent is provided at a portion where the heat sink 32 and the frame 25 are fitted.

The power circuit 33 is attached to the surface of the heat sink 32 on the side where the circuit case 34 is attached.

The power circuit 33 is attached to the heat sink 32 via grease (not shown), an insulating sheet (not shown), or the like, thus improving the heat dissipation property.

The power circuit 33 has mounted thereon components such as: the semiconductor switching element 12a composing a three-phase bridge circuit for switching the motor current of the electric motor 2 in accordance with the magnitude and direction of the assist torque; the shunt resistor 13 for detecting the current of the electric motor 2; and the semiconductor switching element 12b which forms a power supply relay as switch means for conducting or interrupting battery current supplied from the battery 5 to the semiconductor switching element 12a.

The bus bars 35c penetrating through the intermediate member 43 and the control board 20 are electrically connected to the power circuit 33 by, for example, TIG welding or resistance welding.

The rotational sensor 16 detects the direction of a magnetic field generated by the sensor magnet 28, thereby detecting the rotation angle of the rotor 24.

The rotational sensor 16 is provided so as to be opposed to the sensor magnet 28 attached to one end of the rotary shaft 21.

The rotational sensor 16 is mounted on the sensor board 17.

The sensor board 17 is fixed to a part of the heat sink 32 by a screw (not shown) or the like.

The sensor board 17 and the control board 20 are electrically connected via the bus bar 35a.

The control board 20 is electrically connected to the power circuit 33 via the bus bar 35b. Circuit elements and the like, including the microcomputer 18 and the drive circuit 19, are mounted on the control board 20.

The microcomputer 18 is provided with a current detection circuit for detecting the motor current flowing through the electric motor 2 via one end of the shunt resistor 13, and calculates assist torque based on the steering torque signal from the torque sensor 6, and calculates current corresponding to the assist torque by feeding back the motor current and the rotation angle of the rotor 24 detected by the rotational sensor 16.

The microcomputer 18 outputs signals for controlling the semiconductor switching elements 12a and 12b.

The coil 15 is electrically connected to the power circuit 33 via a bus bar (not shown).

The coil 15 prevents electromagnetic noise caused in switching operation of the semiconductor switching elements 12a and 12b from leaking to the outside.

The circuit case 34 is attached to the end surface of the heat sink 32 on the side opposite to the electric motor 2.

The circuit case 34 is provided with: the power connector 7 for making electric connection with the battery 5 of the vehicle and for supplying power; the vehicle side signal connector 8 for receiving information about the vehicle such as the vehicle speed; and the torque sensor connector 9 for receiving a signal from the torque sensor 6.

The capacitor assembly unit 200 is provided such that the smoothing capacitors 14 are on the circuit case 34 side. The capacitor assembly unit 200 is fixed to the intermediate member 43 by a screw (not shown) or the like.

The intermediate member 43 is attached to the circuit case 34.

The intermediate member 43 may be made of metal, or preferably, may be an insulating member such as resin so that insulation property is ensured and the weight of the product can be reduced.

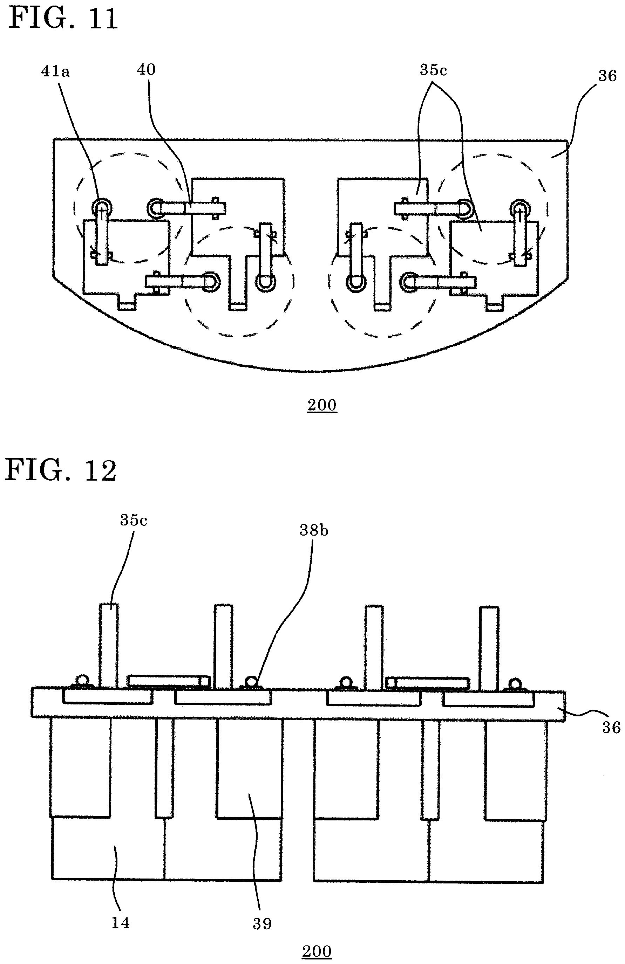

Next, the structure of the capacitor assembly unit 200 will be described based on FIG. 11 and FIG. 12.

FIG. 11 is a plan view of the capacitor assembly unit 200 according to the present embodiment 3. FIG. 12 is a side view of the capacitor assembly unit 200 according to the present embodiment 3.

The capacitor assembly unit 200 includes: the plurality of (in the drawing, four) smoothing capacitors 14 having a cylindrical shape, for removing a ripple component of the motor current flowing through the electric motor 2; the bus bars 35c electrically connected to the power circuit 33; and the holder 36 for holding the smoothing capacitors 14 and the bus bars 35c.

The bus bars 35c and the holder 36 may be joined by outsert or insert. In the present embodiment, the case where the bus bars 35c are integrally joined with the holder 36 by insert molding will be described.

Since the holder 36 is required to make electrical insulation between each bus bar 35c and the heat sink 32 and between positive and negative electrodes of the bus bar 35c, the holder 36 is made of an insulating member such as resin.

The holder 36 has substantially a flat shape elongated in the direction perpendicular to the rotary shaft 21 of the electric motor 2. The holder 36 has an attachment surface for the bus bars 35c, and has, on the opposite side, an attachment surface for the smoothing capacitors 14.

The attachment surface for the smoothing capacitors 14, of the holder 36 has the plurality of holding portions 39 which are for attaching the smoothing capacitors 14 and which extend in parallel with the rotary shaft 21 of the electric motor 2.

Each bus bar 35c has a flat surface portion to be fitted into the groove 37 of the holder 36, and a connection portion extending toward the power circuit 33 in a direction perpendicular to the flat surface portion.

Each bus bar 35c has: the plurality of projections 38b at a part of the flat surface portion, which slightly protrude in the rotary shaft direction of the electric motor 2; and the plurality of penetrating holes 41b at positions for fitting to the projections 38a of the holder 36.

The bus bars 35c are arranged in the horizontal direction on the attachment surface of the holder 36.

The manner of attachment between the bus bars 35c and the holder 36 is the same as in embodiment 1.

Each smoothing capacitor 14 has the lead wires 40 protruding.

The smoothing capacitors 14 are arranged in the horizontal direction on the attachment surface of the holder 36.

Each smoothing capacitor 14 is fixed to the holder 36 by being attached to the holding portion 39 of the holder 36 such that the cylinder axis of the smoothing capacitor 14 is parallel with the rotary shaft 21 of the electric motor 2.

The lead wire 40 of each smoothing capacitor 14 passes through the hole 41a of the holder 36 so as to penetrate to the attachment surface side of the bus bar 35c.

The lead wire 40 of each smoothing capacitor 14 is bent toward the projection 38b of the bus bar 35c so that the lead wire 40 contacts with the end of the projection 38b of the bus bar 35c.

The contact portions of the projection 38b of the bus bar 35c and the lead wire 40 are welded by, for example, resistance welding, whereby the smoothing capacitor 14 and the bus bar 35c are electrically connected.

In the present embodiment, the holder 36 has the hole 41a for allowing the lead wire 40 to penetrate therethrough, and the lead wire 40 is bent after the smoothing capacitor 14 is attached to the holder 36. However, the lead wire 40 of the smoothing capacitor 14 may be bent before attachment to the holder 36, and then the lead wire may be passed through a hole (not shown) provided in the holder 36, to be electrically connected to the bus bar 35c.

As described above, in the present embodiment 3, the power circuit 33 is mounted on one surface of the heat sink 32 perpendicular to the axial line of the rotary shaft 21 of the electric motor 2, the capacitor assembly unit 200 is located on another surface parallel with the surface on which the power circuit 33 is mounted, and the intermediate member 43 is provided between the power circuit 33 and the capacitor assembly unit 200. Thus, the capacitor assembly unit 200 is located opposite to the power circuit 33 via the intermediate member 43. Therefore, the area of the power circuit 33 can be enlarged without increase in the diameter of the electric motor 2.

It is not necessary to provide grooves or the like for attaching the smoothing capacitors 14 in the heat sink 32. Therefore, the heat capacity of the heat sink 32 increases, and the heat dissipation property is improved.

The accuracy of processes of components of the control device 4 and the mounting surfaces of the components can be reduced, leading to cost reduction.

It is not necessary to consider interference in assembling, and assembly workability is improved.

Since the smoothing capacitors 14 are separated from the power circuit 33, electromagnetic noise can be reduced.

The power circuit 33, the intermediate member 43, and the capacitor assembly unit 200 are attached to the heat sink 32 from one direction. Thus, it becomes possible to assemble the product without turning over the product. Therefore, it is not necessary to provide a mechanism for preventing components from dropping at the time of turning over, and the structures of components can be simplified.

Since the capacitor assembly unit 200 is attached to the intermediate member 43, it is not necessary to consider interference with the rotary shaft 21, the sensor magnet 28, or the like. Therefore, the degree of freedom in layout of the smoothing capacitors 14 increases.

In the capacitor assembly unit 200, the smoothing capacitors 14 are attached to the holder 36 such that the cylinder axes of the smoothing capacitors 14 are parallel with the rotary shaft 21 of the electric motor 2. Therefore, the bending lengths of the lead wires 40 of the smoothing capacitors 14 do not depend on variations in the outer diameters of the smoothing capacitors 14, the bus bars 35c and the lead wires 40 can be stably connected, and the reliability of the product can be ensured. In the capacitor assembly unit 200, the bus bars 35c are joined with the holder 36 by insert. Therefore, the insulation property increases to improve the reliability of the product. Since the bus bars 35c are covered with resin, the heat dissipation property is improved.

In the capacitor assembly unit 200, the holder 36, the bus bars 35c, and the lead wires 40 are all arranged and connected on the same plane. Therefore, the dimension in the shaft direction is small, and a simple and inexpensive structure is achieved. Since the holder 36 has the holding portions 39, the smoothing capacitors 14 can be held against vibration or impact, and in addition, the holding portions 39 can be utilized as guides for attaching the smoothing capacitors 14 to the holder 36.

Since the projection 38b of each bus bar 35c and the lead wire 40 of each smoothing capacitor 14 are welded by resistance welding or the like, the density of current can be increased and the connection can be stably performed.

In the case where two smoothing capacitors 14 are connected to the bus bar 35c for one polarity as in the present embodiment, if electrodes are brought into contact with two connection portions between the lead wires 40 and the projections 38b of the bus bars 35c so as to be welded at the same time, the cycle time can be shortened.

In the case where the smoothing capacitors 14 and the bus bars 35c are connected by resistance welding as in the present embodiment, current is applied while the electrodes pressurize the lead wires 40 in the rotary shaft direction. Therefore, as compared to the case of, for example, using such a current feeding tool as to clamp the welded part as in TIG welding, an area to interfere with components can be reduced, and the degree of freedom in the mounting layout can be enhanced.

The lead wires 40 of each smoothing capacitor 14 can be welded to the bus bar 35c in the state in which the lengths of the lead wires 40 for the respective polarities are different from each other. Therefore, the polarities of the smoothing capacitor 14 can be easily identified, and assembly defect is reduced, leading to improvement in the first pass yield.

By elongating the lead wires 40, the part where the lead wire 40 and the bus bar 35c are welded can be separated from the smoothing capacitor 14, and influence on the smoothing capacitor 14 caused by heat generated in welding can be reduced without changing the axial length of the product. Thus, the reliability of the product can be improved.

It is noted that, within the scope of the present invention, the above embodiments may be freely combined with each other, or each of the above embodiments may be modified or abbreviated as appropriate.

### DESCRIPTION OF THE REFERENCE CHARACTERS

- 1: handle
- 2: electric motor
- 3: speed reducer
- 4: control device
- 5: battery
- 6: torque sensor
- 7: power connector
- 8: vehicle side signal connector
- 9: torque sensor connector
- 10: armature winding
- 11: stator
- 12a, 12b: semiconductor switching element
- 13: shunt resistor
- 14: smoothing capacitor
- 15: coil
- 16: rotational sensor
- 17: sensor board
- 18: microcomputer
- 19: drive circuit
- 20: control board
- 21: rotary shaft
- 22a, 22b: bearing
- 23: rotor magnet
- 24: rotor
- 25: frame
- 26: housing
- 27: coupling
- 28: sensor magnet
- 29: sensor magnet holder
- 30: insulator
- 31: screw
- 32: heat sink
- 33: power circuit
- 34: circuit case
- 35a, 35b, 35c: bus bar
- 36: holder
- 37: groove
- 38a, 38b: projection
- 39: holding portion
- 40: lead wire
- 41a, 41b: hole
- 42: swage portion
- 43: intermediate member
- 100: motor drive device
- 200: capacitor assembly unit

## Claims

1. A motor drive device comprising:
an electric motor(2); and
a control device(4) located on an axial line of a rotary shaft(21) of the electric motor(2) and controlling driving of the electric motor(2), wherein
the control device(4) includes:
a semiconductor switching element(12a) composing a bridge circuit for controlling current of the electric motor(2);
a sensor board(17) on which a rotational sensor(16) for detecting a phase of a rotor of the electric motor (2) is mounted;
a capacitor assembly unit(200) including a smoothing capacitor(14) for suppressing a ripple component of current flowing through the electric motor(2);
a power circuit(33) including the semiconductor switching element (12a) ;
a heat sink(32) for dissipating heat generated from the power circuit(33); and
a control board(20) on which a microcomputer(18) for generating a drive signal for driving the semiconductor switching element(12a) is mounted, wherein
the heat sink(32) is located on the axial line of the rotary shaft(21) of the electric motor(2),
the power circuit(33) is mounted on one surface of the heat sink(32) perpendicular to the axial line of the rotary shaft(21) of the electric motor(2), and
the capacitor assembly unit(200) is located on another surface parallel with the surface on which the power circuit(33) is mounted,
**characterized in that**
the control device(4) has the capacitor assembly unit(200) located opposite to the power circuit(33) via the heat sink(32), and
the capacitor assembly unit(200) is electrically connected to the power circuit(33) via a bus bar(35c) penetrating through the heat sink(32).

2. A motor drive device comprising:
an electric motor(2); and
a control device(4) located on an axial line of a rotary shaft(21) of the electric motor(2) and controlling driving of the electric motor(2), wherein
the control device(4) includes:
a semiconductor switching element(12a) composing a bridge circuit for controlling current of the electric motor(2);
a sensor board(17) on which a rotational sensor(16) for detecting a phase of a rotor of the electric motor(2) is mounted;
a capacitor assembly unit(200) including a smoothing capacitor(14) for suppressing a ripple component of current flowing through the electric motor(2);
a power circuit(33) including the semiconductor switching element(12a);
a heat sink(32) for dissipating heat generated from the power circuit(33); and
a control board(20) on which a microcomputer(18) for generating a drive signal for driving the semiconductor switching element(12a) is mounted, wherein
the heat sink(32) is located on the axial line of the rotary shaft(21) of the electric motor(2),
the power circuit(33) is mounted on one surface of the heat sink(32) perpendicular to the axial line of the rotary shaft(21) of the electric motor(2), and
the capacitor assembly unit(200) is located on another surface parallel with the surface on which the power circuit(33) is mounted,
**characterized in that**
the control device(4) includes an intermediate member(43) provided between the power circuit(33) and the capacitor assembly unit(200), and has the capacitor assembly unit (200) located opposite to the power circuit (33) via the intermediate member(43), and
the capacitor assembly unit(200) is electrically connected to the power circuit(33) via a bus bar(35c) penetrating through the intermediate member(43).

3. The motor drive device according to claim 1 or 2, wherein
the capacitor assembly unit(200) is composed of: a holder(36) provided with the bus bar(35c) and made of an insulating member; and the smoothing capacitor(14), and
the bus bar(35c) and the smoothing capacitor(14) are electrically connected.

4. The motor drive device according to claim 3, wherein
the smoothing capacitor(14) has a cylindrical shape, and
the smoothing capacitor(14) is mounted on the holder(36) such that a cylinder axis of the smoothing capacitor(14) is perpendicular to the rotary shaft(21) of the electric motor(2).

5. The motor drive device according to claim 3, wherein
the smoothing capacitor(14) has a cylindrical shape, and
the smoothing capacitor(14) is mounted on the holder(36) such that a cylinder axis of the smoothing capacitor(14) is parallel with the rotary shaft(21) of the electric motor(2).

6. The motor drive device according to any one of claims 3 to 5, wherein
the bus bar(35c) is joined with the holder(36) by outsert.

7. The motor drive device according to any one of claims 3 to 5, wherein
the bus bar(35c) is insert-molded with the holder(36).

8. The motor drive device according to any one of claims 3 to 7, wherein
the holder(36) has substantially a flat shape elongated in a direction perpendicular to the axial line of the rotary shaft(21) of the electric motor(2),
the bus bar(35c) is arranged along a surface of the holder(36), and
the smoothing capacitor(14) is connected to the bus bar(35c) via a lead wire(40) arranged along a surface of the bus bar(35c).

9. The motor drive device according to claim 8, wherein
the smoothing capacitor(14) is attached to a holding portion(39) provided on a surface of the holder(36) on a side opposite to a connection portion between the bus bar(35c) and the lead wire(40).

10. The motor drive device according to any one of claims 6, 8, and 9, wherein
the holder(36) has a projection(38a) at the same position as a hole provided in the bus bar(35c), so that the bus bar(35c) is fixed by a swage portion formed between the bus bar(35c) and the holder(36), the swage portion being formed by an end of the projection(38a) being heated and melted after the holder(36) and the bus bar(35c) are joined.

11. The motor drive device according to any one of claims 6 to 9, wherein
the holder(36) has a groove(37) which allows a flat surface portion of the bus bar(35c) to be attached therein.

12. The motor drive device according to claim 11, wherein
a lead wire(40) of the smoothing capacitor(14) and the bus bar(35c) are connected by resistance welding while being pressurized in a direction perpendicular to the flat surface portion of the holder(36).

13. The motor drive device according to claim 12, wherein
the resistance welding is projection welding with a projection provided at a part of the bus bar(35c).

## Patentansprüche

1. Eine Motorantriebsvorrichtung, umfassend:
einen Elektromotor (2); und
eine Steuervorrichtung (4), die sich auf einer axialen Linie einer Drehachse (21) des Elektromotors (2) befindet und den Antrieb des Elektromotors (2) steuert, wobei
die Steuervorrichtung (4) beinhaltet:
ein Halbleiterschaltelement (12a), das eine Brückenschaltung zum Steuern des Stroms des Elektromotors (2) bildet;
eine Sensorplatine (17), auf der ein Rotationssensor (16) zum Erfassen einer Phase eines Rotors des Elektromotors (2) montiert ist;
eine Kondensatorbaugruppeneinheit (200) beinhaltend einen Glättungskondensator (14) zum Unterdrücken einer Welligkeitskomponente des durch den Elektromotor (2) fließenden Stroms;
ein Stromkreis (33), das Halbleiterschaltelement (12a) beinhaltend;
einen Kühlkörper (32) zum Ableiten von Wärme, die von dem Stromkreis (33) erzeugt wird; und
eine Steuerplatine (20), auf der ein Mikrocomputer (18) zum Erzeugen eines Antriebssignals zum Antreiben des Halbleiterschaltelements (12a) montiert ist, wobei
der Kühlkörper (32) auf der axialen Linie der Drehachse (21) des Elektromotors (2) angeordnet ist,
der Stromkreis (33) auf einer Oberfläche des Kühlkörpers (32) senkrecht zur axialen Linie der Drehachse (21) des Elektromotors (2) montiert ist, und
die Kondensatorbaugruppeneinheit (200) auf einer anderen Oberfläche parallel zu der Oberfläche angeordnet ist, auf der die Leistungsschaltung (33) montiert ist,
**dadurch gekennzeichnet, dass**
die Steuervorrichtung (4) die Kondensatorbaugruppeneinheit (200) aufweist, die über den Kühlkörper (32) gegenüber des Stromkreises (33) angeordnet ist, und
die Kondensatorbaugruppeneinheit (200) über eine durch den Kühlkörper (32) hindurchgehende Sammelschiene (35c) mit dem Stromkreis (33) elektrisch verbunden ist.

2. Eine Motorantriebsvorrichtung, umfassend:
einen Elektromotor (2); und
eine Steuervorrichtung (4), die sich auf einer axialen Linie einer Drehachse (21) des Elektromotors (2) befindet und den Antrieb des Elektromotors (2) steuert, wobei
die Steuervorrichtung (4) beinhaltet:
ein Halbleiterschaltelement (12a), das eine Brückenschaltung zum Steuern des Stroms des Elektromotors (2) bildet;
eine Sensorplatine (17), auf der ein Rotationssensor (16) zum Erfassen einer Phase eines Rotors des Elektromotors (2) montiert ist;
eine Kondensatorbaugruppeneinheit (200) mit einem Glättungskondensator (14) zum Unterdrücken einer Welligkeitskomponente des durch den Elektromotor (2) fließenden Stroms;
einen Stromkreis (33), die das Halbleiterschaltelement (12a) beinhaltet;
einen Kühlkörper (32) zum Ableiten von Wärme, die von der Stromkreis (33) erzeugt wird; und
eine Steuerplatine (20), auf der ein Mikrocomputer (18) zum Erzeugen eines Antriebssignals zum Antreiben des Halbleiterschaltelements (12a) montiert ist, worin der Kühlkörper (32) auf der axialen Linie der Drehachse (21) des Elektromotors (2) angeordnet ist,
der Stromkreis (33) auf einer Oberfläche des Kühlkörpers (32) senkrecht zur axialen Linie der Drehachse (21) des Elektromotors (2) montiert ist, und
die Kondensatorbaugruppeneinheit (200) auf einer anderen Oberfläche parallel zu der Oberfläche angeordnet ist, auf der der Stromkreis (33) montiert ist,
**dadurch gekennzeichnet, dass**
die Steuervorrichtung (4) ein Zwischenelement (43) beinhaltet, das zwischen dem Stromkreis (33) und der Kondensatorbaugruppeneinheit (200) vorgesehen ist, und die Kondensatorbaugruppenheit (200), die gegenüber der Stromkreis (33) über das Zwischenelement (43) angeordnet ist, und
die Kondensatorbaugruppe (200) über eine das Zwischenelement (43) durchdringende Sammelschiene (35c) elektrisch mit dem Stromkreis (33) verbunden ist.

3. Die Motorantriebsvorrichtung nach Anspruch 1 oder 2, wobei
die Kondensatorbaugruppeneinheit (200) besteht aus: einem Halter (36), der mit der Sammelschiene (35c) versehen ist und aus einem Isolierelement gefertigt ist; und dem Glättungskondensator (14), und
die Sammelschiene (35c) und der Glättungskondensator (14) elektrisch verbunden sind.

4. Die Motorantriebsvorrichtung nach Anspruch 3, wobei
der Glättungskondensator (14) eine zylindrische Form aufweist und
der Glättungskondensator (14) auf dem Halter (36) so montiert ist, dass eine Zylinderachse des Glättungskondensators (14) senkrecht zur Drehachse (21) des Elektromotors (2) steht.

5. Die Motorantriebsvorrichtung nach Anspruch 3, wobei
der Glättungskondensator (14) eine zylindrische Form aufweist und
der Glättungskondensator (14) auf dem Halter (36) so montiert ist, dass eine Zylinderachse des Glättungskondensators (14) parallel zur Drehachse (21) des Elektromotors (2) verläuft.

6. Die Motorantriebsvorrichtung nach einem der Ansprüche 3 bis 5, wobei
die Sammelschiene (35c) mit dem Halter (36) durch Outsert verbunden ist.

7. Die Motorantriebsvorrichtung nach einem der Ansprüche 3 bis 5, wobei
die Sammelschiene (35c) mit dem Halter (36) umspritzt ist.

8. Die Motorantriebsvorrichtung nach einem der Ansprüche 3 bis 7, wobei
der Halter (36) im Wesentlichen eine flache Form aufweist, die in einer Richtung senkrecht zur axialen Linie der Drehachse (21) des Elektromotors (2) verlängert ist,
die Sammelschiene (35c) entlang einer Oberfläche des Halters (36) angeordnet ist, und
der Glättungskondensator (14) mit der Sammelschiene (35c) über einen entlang einer Oberfläche der Sammelschiene (35c) angeordneten Leitungsdraht (40) verbunden ist.

9. Die Motorantriebsvorrichtung nach Anspruch 8, wobei
der Glättungskondensator (14) an einem Halteabschnitt (39) befestigt ist, der auf einer Oberfläche des Halters (36) auf einer Seite gegenüber einem Verbindungsabschnitt zwischen der Sammelschiene (35c) und dem Leitungsdraht (40) vorgesehen ist.

10. Die Motorantriebsvorrichtung nach einem der Ansprüche 6, 8 und 9, wobei
der Halter (36) einen Vorsprung (38a) an der gleichen Position wie ein in der Sammelschiene (35c) vorgesehenes Loch aufweist, so dass die Sammelschiene (35c) durch den zwischen der Sammelschiene (35c) und dem Halter (36) gebildeten Gesenkabschnitt fixiert ist, wobei der Gesenkabschnitt durch ein Ende des Vorsprungs (38a) gebildet wird, das erwärmt und geschmolzen wird, nachdem der Halter (36) und die Sammelschiene (35c) verbunden sind.

11. Die Motorantriebsvorrichtung nach einem der Ansprüche 6 bis 9, wobei
der Halter (36) eine Nut (37) aufweist, die es ermöglicht, einen flachen Oberflächenabschnitt der Stromschiene (35c) darin zu befestigen.

12. Die Motorantriebsvorrichtung nach Anspruch 11, wobei
ein Zuleitungsdraht (44) des Glättungskondensators (14) und der Sammelschiene (35c) durch Widerstandsschweißen verbunden sind, während sie in einer Richtung senkrecht zum flachen Oberflächenabschnitt des Halters (36) unter Druck gesetzt werden.

13. Die Motorantriebsvorrichtung nach Anspruch 12, wobei
das Widerstandsschweißen Buckelschweißen mit einem Vorsprung, der an einem Teil der Sammelschiene (35c) vorgesehen ist, ist.

## Revendications

1. Dispositif d'excitation de moteur comprenant :
un moteur électrique (2) ; et
un dispositif de commande (4) situé sur une ligne axiale d'un arbre rotatif (21) du moteur électrique (2) et commandant l'excitation du moteur électrique (2), dans lequel
le dispositif de commande (4) inclut :
un élément de commutation à semi-conducteur (12a) composant un circuit en pont pour commander le courant du moteur électrique (2) ;
une carte de capteur (17) sur laquelle est monté un capteur de rotation (16) pour détecter une phase d'un rotor du moteur électrique (2) ;
une unité ensemble condensateur (200) incluant un condensateur de lissage (14) pour supprimer une composante d'ondulation de courant s'écoulant à travers le moteur électrique (2) ;
un circuit d'alimentation (33) incluant l'élément de commutation à semi-conducteur (12a) ;
un dissipateur thermique (32) pour dissiper la chaleur générée à partir du circuit d'alimentation (33) ; et
une carte de commande (20) sur laquelle est monté un micro-ordinateur (18) pour générer un signal d'excitation pour exciter l'élément de commutation à semi-conducteur (12a),
dans lequel
le dissipateur thermique (32) se situe sur la ligne axiale de l'arbre rotatif (21) du moteur électrique (2),
le circuit d'alimentation (33) est monté sur une surface du dissipateur thermique (32) perpendiculairement à la ligne axiale de l'arbre rotatif (21) du moteur électrique (2), et
l'unité ensemble condensateur (200) se situe sur une autre surface parallèle à la surface sur laquelle est monté le circuit d'alimentation (33),
**caractérisé en ce que**
le dispositif de commande (4) a l'unité ensemble condensateur (200) située à l'opposé du circuit d'alimentation (33) via le dissipateur thermique (32), et
l'unité ensemble condensateur (200) est électriquement connectée au circuit d'alimentation (33) via une barre omnibus (35c) pénétrant à travers le dissipateur thermique (32).

2. Dispositif d'excitation de moteur comprenant :
un moteur électrique (2) ; et
un dispositif de commande (4) situé sur une ligne axiale d'un arbre rotatif (21) du moteur électrique (2) et commandant l'excitation du moteur électrique (2), dans lequel
le dispositif de commande (4) inclut :
un élément de commutation à semi-conducteur (12a) composant un circuit en pont pour commander le courant du moteur électrique (2) ;
une carte de capteur (17) sur laquelle est monté un capteur de rotation (16) pour détecter une phase d'un rotor du moteur électrique (2) ;
une unité ensemble condensateur (200) incluant un condensateur de lissage (14) pour supprimer une composante d'ondulation de courant s'écoulant à travers le moteur électrique (2) ;
un circuit d'alimentation (33) incluant l'élément de commutation à semi-conducteur (12a) ;
un dissipateur thermique (32) pour dissiper la chaleur générée à partir du circuit d'alimentation (33) ; et
une carte de commande (20) sur laquelle est monté un micro-ordinateur (18) pour générer un signal d'excitation pour exciter l'élément de commutation à semi-conducteur (12a),
dans lequel
le dissipateur thermique (32) se situe sur la ligne axiale de l'arbre rotatif (21) du moteur électrique (2),
le circuit d'alimentation (33) est monté sur une surface du dissipateur thermique (32) perpendiculairement à la ligne axiale de l'arbre rotatif (21) du moteur électrique (2), et
l'unité ensemble condensateur (200) se situe sur une autre surface parallèle à la surface sur laquelle est monté le circuit d'alimentation (33),
**caractérisé en ce que**
le dispositif de commande (4) inclut un élément intermédiaire (43) disposé entre le circuit d'alimentation (33) et l'unité ensemble condensateur (200), et a l'unité ensemble condensateur (200) située à l'opposé du circuit d'alimentation (33) via l'élément intermédiaire (43), et
l'unité ensemble condensateur (200) est électriquement connectée au circuit d'alimentation (33) via une barre omnibus (35c) pénétrant dans l'élément intermédiaire (43).

3. Dispositif d'excitation de moteur selon la revendication 1 ou 2, dans lequel
l'unité ensemble condensateur (200) est composée : d'un support (36) pourvu de la barre omnibus (35c) et constitué d'un élément isolant; et du condensateur de lissage (14), et
la barre omnibus (35c) et le condensateur de lissage (14) sont électriquement connectés.

4. Dispositif d'excitation de moteur selon la revendication 3, dans lequel
le condensateur de lissage (14) a une forme cylindrique, et
le condensateur de lissage (14) est monté sur le support (36) de telle sorte qu'un axe de cylindre du condensateur de lissage (14) est perpendiculaire à l'arbre rotatif (21) du moteur électrique (2).

5. Dispositif d'excitation de moteur selon la revendication 3, dans lequel
le condensateur de lissage (14) a une forme cylindrique, et
le condensateur de lissage (14) est monté sur le support (36) de telle sorte qu'un axe de cylindre du condensateur de lissage (14) est parallèle à l'arbre rotatif (21) du moteur électrique (2).

6. Dispositif d'excitation de moteur selon l'une quelconque des revendications 3 à 5, dans lequel
la barre omnibus (35c) est jointe au support (36) par insert extérieur.

7. Dispositif d'excitation de moteur selon l'une quelconque des revendications 3 à 5, dans lequel
la barre omnibus (35c) est moulée par insertion avec le support (36).

8. Dispositif d'excitation de moteur selon l'une quelconque des revendications 3 à 7, dans lequel
le support (36) a sensiblement une forme plate allongée dans une direction perpendiculaire à la ligne axiale de l'arbre rotatif (21) du moteur électrique (2),
la barre omnibus (35c) est agencée le long d'une surface du support (36), et
le condensateur de lissage (14) est connecté à la barre omnibus (35c) via un fil de sortie (40) agencé le long d'une surface de la barre omnibus (35c).

9. Dispositif d'excitation de moteur selon la revendication 8, dans lequel
le condensateur de lissage (14) est attaché à une partie de maintien (39) disposée sur une surface du support (36) sur un côté opposé à une partie de connexion entre la barre omnibus (35c) et le fil de sortie (40).

10. Dispositif d'excitation de moteur selon l'une quelconque des revendications 6, 8 et 9, dans lequel
le support (36) comporte une projection (38a) dans la même position qu'un trou disposé dans la barre omnibus (35c), de telle sorte que la barre omnibus (35c) est fixée par une partie de sertissage formée entre la barre omnibus (35c) et le support (36), la partie de sertissage étant formée par une extrémité de la projection (38a) qui est chauffée et fondue après la jonction du support (36) et de la barre omnibus (35c).

11. Dispositif d'excitation de moteur selon l'une quelconque des revendications 6 à 9, dans lequel
le support (36) comporte une rainure (37) qui permet à une partie de surface plate de la barre omnibus (35c) d'être attachée dans celle-ci.

12. Dispositif d'excitation de moteur selon la revendication 11, dans lequel
un fil de sortie (40) du condensateur de lissage (14) et la barre omnibus (35c) sont connectés par moulage par résistance tout en étant mis sous pression dans une direction perpendiculaire à la partie de surface plate du support (36).

13. Dispositif d'excitation de moteur selon la revendication 12, dans lequel
le moulage par résistance est un moulage par projection avec une projection disposée au niveau d'une partie de la barre omnibus (35c).
